# EUROPEAN PATENT APPLICATION

(11) **EP 3 690 892 A1**
(43) Date of publication of application: **05.08.2020**
(21) Application number: 18861193.3
(22) Date of filing: 12.07.2018
(51) Int. Cl.: G21D 3/04, G21D 3/00

(54) **NUCLEAR POWER PLANT DEFENSE-IN-DEPTH SAFETY APPARATUS HAVING DIVERSITY**

(30) Priority: 29.09.2017 KR 20170127132
(71) Applicant: Korea Hydro & Nuclear Power Co., Ltd, Gyeongju-si, Gyeongsangbuk-do 38120 (KR)
(72) Inventor: BAE, Byoung Hwan, Daejeon 34053 (KR)
(74) Representative: Habermann, Hruschka & Schnabel
(86) International application number: PCT/KR2018/007887
(87) International publication number: WO 2019/066218

(57) **Abstract**

The present invention relates to a nuclear power plant defense-in-depth safety apparatus having diversity, comprising: an analog type first control unit for generating an operation signal for a safety system; a digital type second control unit for generating an operation signal for the safety system; and a device interface module for receiving the operation signal of the first control unit and the operation signal of the second control unit and applying the operation signal of the first control unit to the safety system as a top priority.

## Description

### [Technical Field]

The present invention relates to a defense-in-depth safety apparatus with diversity in a nuclear power plant.

### [Background Art]

A safety system for a nuclear power plant plays a critical role in operating the nuclear power plant safely.

With digitalization of the nuclear power plant, the safety system is also controlled by a digitalized control device. However, the digital control device is operated by a computer program made of complex software and thus there is a possibility to incur errors in the digital control device. For this problem, countries including the United States require thorough verification of safety of such a digital device.

### [Disclosure]

### [Technical Problem]

Accordingly, an object of the present invention is to provide a defense-in-depth safety apparatus with diversity in a nuclear power plant.

### [Technical Solution]

The object of the present invention can be accomplished by providing a diverse defense-in-depth safety apparatus with diversity in a nuclear power plant, the apparatus including: an analog-type first controller configured to generate an operation signal for a safety system; a digital-type second controller configured to generate an operation signal for the safety system; and a component interface module (CIM) configured to receive the operation signal from the first controller and the operation signal from the second controller, and apply first the operation signal from the first controller to the safety system as a top priority.

The operation signal from the second controller may include an engineered safety feature component control system signal (ESF-CCS) and a diversity protection system signal.

The safety system may include at least one of a safety injection system, a main steam isolation system, a containment spray system, or a steam generator auxiliary feedwater system.

The first controller may be not affected from a common mode failure of the second controller.

The first controller may include a selector that allows an operator to select operation by the first controller.

The apparatus may further include a selector that allows the operator to select operation by the first controller.

The apparatus may further include a display unit that is not affected from a common mode failure of the second controller and displays an emergency operation state.

The first controller, the second controller, and the display unit may be installed inside a main control room.

### [Advantageous Effects]

According to the present invention, there is provided a defense-in-depth safety apparatus with diversity in a nuclear power plant. With this apparatus, it is possible to safely maintain the nuclear power plant in any case, thereby preventing a severe accident, corresponding a beyond design basis accident, in advance and securing economic effects thereby.

### [Description of Drawings]

FIG. 1 is a diagram showing configuration of a defense-in-depth safety apparatus according to a first embodiment of the present invention.
FIG. 2 is a diagram showing physical arrangement in the defense-in-depth safety apparatus according to the first embodiment of the present invention.
FIG. 3 is a diagram showing configuration of a defense-in-depth safety apparatus according to a second embodiment of the present invention.

### [Mode for Invention]

Hereinafter, the present invention will be described in detail with reference to the accompanying drawings.

The accompanying drawings correspond to merely an example shown to illustrate technical scope of the present invention more detail, and the scope of the present invention is not limited to the accompanying drawings. In addition, for explanation of a relationship between elements, size and spacing may be shown differently from actual implementation.

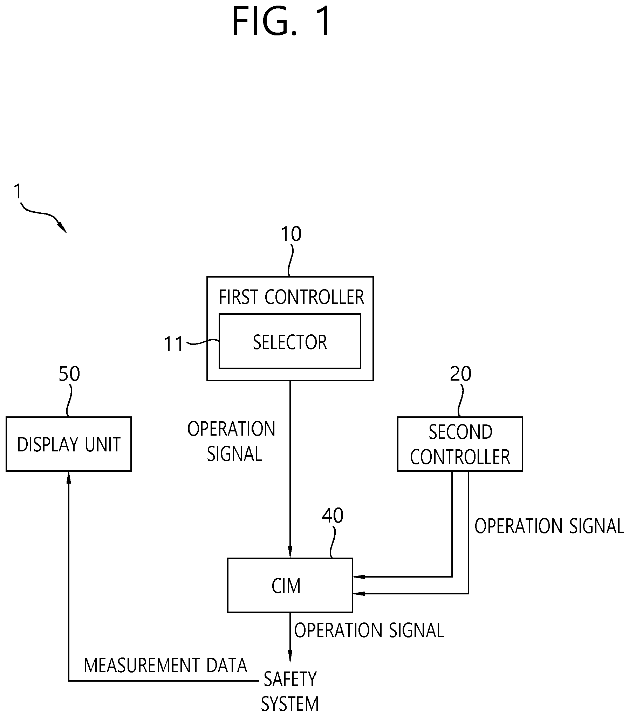

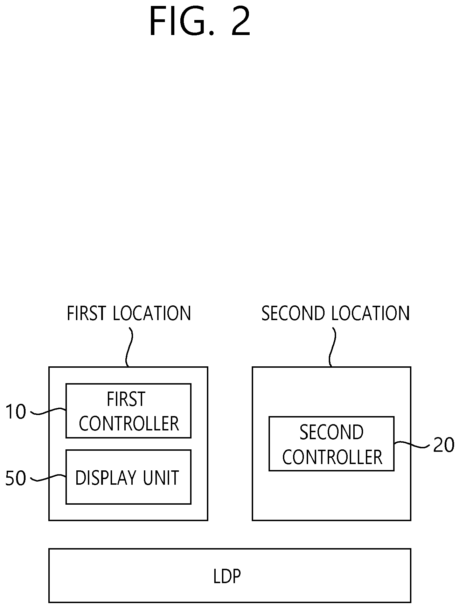

With reference to FIGS. 1 and 2, a defense-in-depth safety apparatus according to a first embodiment of the present invention will be described.

FIG. 1 is a diagram showing configuration of the defense-in-depth safety apparatus according to the first embodiment of the present invention, and FIG. 2 is a diagram showing physical arrangement of the defense-in-depth safety apparatus according to the first embodiment of the present invention.

A safety apparatus 1 according to the first embodiment of the present invention includes a first controller 10, a second controller 20, a component interface module (CIM) 40, and a display unit 50.

The first controller 10 and the second controller 20 generate operation signals to operate a safety system. The first controller 10 is operated in an analog type. That is, the first controller 10 generates an operation signal according to direct manipulation of an operator. The second controller 20 is operated in a digital type. That is, the second controller 20 generates an operation signal by a computer program, and manipulation by an operator is allowed in this course.

The second controller 20 generates an engineered safety feature component control system signal (ESF-CCS) and a diversity protection system signal to operate the safety system. The ESF-CCS relates to safety of systems excluding a reactor at an emergency, and the diversity protection system signal is to stop the rector at the emergency. The ESF-CCS and the diversity protection system signal are generated from different platforms. These platforms are operated by computer software, and failure may occur in the platforms. However, a common mode failure may occur in these platforms, and, in this case, the second controller 20 does not generate an operation signal that enables the safety system to operate properly.

Meanwhile, the first controller 10 is operated in an analog type and not affected from the common mode failure of the second controller 20. Thus, although the common mode failure occurs in the second controller 20, the first controller 10 is able to generate a normal operation signal.

The first controller 10 includes a selector 11. The selector 11 may be provided in a physical analog switch form or in a digital form. The selector 11 may enable selecting operation of the safety system by the first controller 10, and may be manipulated by an operator.

The CIM 40 receives operation signals from the first controller 10 and the second controller 20, and transmits one of the operation signals to the safety system by a predetermined logic. If an operation signal is generated in the first controller 10 and or if the selector 30 is operated to select an operation signal from the first controller 10, the CIM 40 transmits only the operation signal from the first controller 10 to the safety system. That is, the CIM 40 transmits first the operation signal from the first controller 10 to the safety system as a top priority.

The CIM 40 may be configured as an analog electronic card module.

The display unit 50 receives measurement data on an operation state of the safety system such as temperature or pressure so as to inform an operator. It is possible to monitor a reactor core cooling state, an emergency situation or the like through the display unit 50. The display unit 50 is not affected by a common mode failure or the like of the second controller 20 and thus able to display a plant status even in an emergency situation.

The safety system includes at least one of a safety injection system, a main steam isolation system, a containment spray system, or a steam generator auxiliary feedwater system.

All of the first controller 10, the second controller 20, and the CIM 40, and the display unit 50 may be positioned within a main control room.

The aforementioned components may be physically located as follows: as shown in FIG. 2, a large display panel is disposed on one side of the main control room, the first controller 10 and the display unit 50 are disposed at a first location, and the second controller 20 is disposed at a second location spaced apart from the first location. Specifically, the first controller 10 and the display unit 50 may be positioned at the first location as a safety control panel. The position of the CIM 40 is not limited and thus omitted in the drawings.

Hereinafter, an operation method using the safety apparatus 1 will be described.

When it is difficult to operate the safety system using the second controller 20 due to a common mode failure or the like, an operator operates the selector 11. When the selector 11 is operated to select the first controller 10, the CIM 40 may apply first a signal from the first controller 10 to the safety system as a top priority.

The operator operates the safety system through the first controller 10 while monitoring an operation state. Accordingly, even when digital devices malfunction, the safety system is able to be safely operated in an analog type through the first controller 10 and therefore a severe accident may be prevented in advance.

In another embodiment, if an operation signal is generated in the first controller 10 by manipulation by an operator, without additional operation of the selector 11, the interface module 40 may apply first the signal from the first controller 10 to the safety system as a top priority. In this case, the selector 11 may be omitted.

As such, according to the present invention, a severe accident is prevented in advance, thereby significantly improving reliability and safety of an instrumentation and control system in a nuclear power plant. In addition, since the first controller 10 is configured in an analog type, the present invention may be easily implemented with reduced manufacturing costs and high reliability.

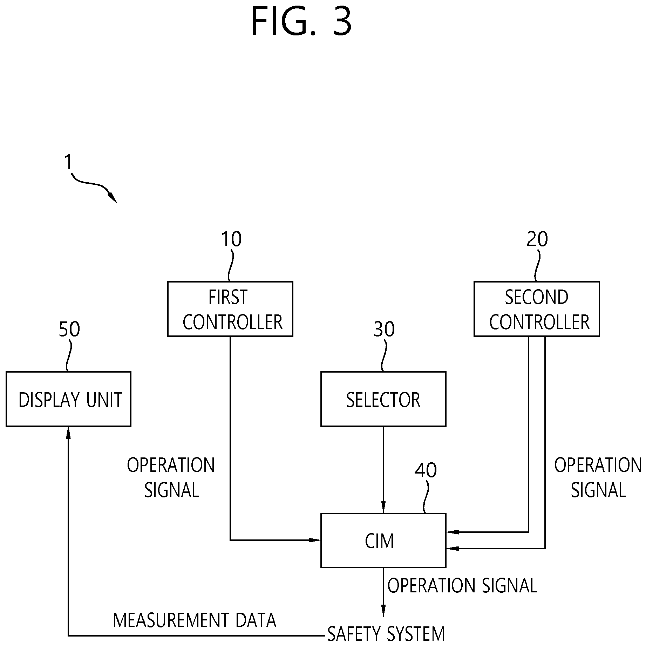

With reference to FIG. 3, a defense-in-depth safety apparatus according to the second embodiment of the present invention will be described. FIG. 3 is a diagram showing configuration of the defense-in-depth safety apparatus according to the second embodiment of the present invention.

According to the second embodiment, a selector 30 is provided separately from a first controller 10. Using the selector 30, it is possible to select one of the first controller 10 and a second controller 20 to operate a safety system. In this case, the selector 30 may be located at the first location shown in FIG. 3, but not limited thereto.

The above-described embodiments are illustrative of the present invention, and the present invention is not limited thereto. Since numerous variations and modifications will become apparent to those skilled in the art once the above disclosure is fully appreciated, the scope and spirit of the invention come within the scope of the appended claims.

## Claims

1. A defense-in-depth safety apparatus with diversity in a nuclear power plant, the apparatus comprising:
an analog-type first controller configured to generate an operation signal for a safety system;
a digital-type second controller configured to generate an operation signal for the safety system; and
a component interface module (CIM) configured to receive the operation signal from the first controller and the operation signal from the second controller, and apply first the operation signal from the first controller to the safety system as a top priority.

2. The apparatus of claim 1, wherein the operation signal from the second controller comprises an engineered safety feature component control system signal (ESF-CCS) and a diversity protection system signal.

3. The apparatus of claim 2, wherein the safety system comprises at least one of a safety injection system, a main steam isolation system, a containment spray system, or a steam generator auxiliary feedwater system.

4. The apparatus of claim 3, wherein the first controller is not affected from a common mode failure of the second controller.

5. The apparatus of claim 3, wherein the first controller comprises a selector that allows an operator to select operation by the first controller.

6. The apparatus of claim 3, further comprising a selector that allows the operator to select operation by the first controller.

7. The apparatus of claim 3, further comprising a display unit that is not affected from a common mode failure of the second controller and displays an emergency operation state.

8. The apparatus of claim 7, wherein the first controller, the second controller, and the display unit are installed inside a main control room.
